# EUROPEAN PATENT APPLICATION

(11) **EP 3 832 760 A1**
(43) Date of publication of application: **09.06.2021**
(21) Application number: 19898077.3
(22) Date of filing: 14.11.2019
(51) Int. Cl.: H01M 4/36, H01M 4/62, H01M 4/1393, H01M 4/587, H01M 10/0525

(54) **CARBON-BOUND LITHIUM ION CONDUCTOR-CARBON COMPOSITE CATHODE MATERIAL HAVING CARBON FIBER STRUCTURE AND FABRICATION METHOD THEREFOR**

(30) Priority: 21.12.2018 CN 201811575295
(71) Applicant: Zhejiang Folta Technology Co., Ltd., Binjiang District Hangzhou Zhejiang 310051 (CN)
(72) Inventor: HE, Wanfang, Hangzhou, Zhejiang 310051 (CN); WANG, Weitao, Hangzhou, Zhejiang 310051 (CN); YANG, Jie, Hangzhou, Zhejiang 310051 (CN)
(74) Representative: Monteiro Alves, Inês
(86) International application number: PCT/CN2019/118250
(87) International publication number: WO 2020/125282

(57) **Abstract**

The present invention relates to a carbon-bound lithium-ion conductor-carbon composite cathode material having a carbon fiber structure and a fabrication method therefor; the interiors of material particles fabricated by using the present method are formed by micro-particles of a lithium-ion conductor crystal and carbon cathode active material undergoing carbon fiber binding, which improves the charging/discharging current density of the material. Carbon fiber has very high tensile strength and fiber flexibility, which buffers to a certain extent volume change, pulverization, and agglomeration which occur in the charging/discharging process, and further effectively prevents bound carbon micro-particles from being peeled into multiple layers of graphite under the conditions of cyclic charging/discharging for a long period, thereby improving the cyclic stability of an electrode, improving the rate performance of the material, and leading to high capacity. The production process of the present material is short and low-cost; when the fabricated mixed particles undergo high temperature processing, a polymer material is carbonized into a three-dimensional carbon fiber net having a carbon fiber structure, which binds lithium-ion conductors and carbon micro-particles in the same particles and completes a step of material production.

## Description

### TECHNICAL FIELD

This disclosure generally relates to a method for fabricating a carbon-bound lithium-ion conductor-carbon composite cathode material having a carbon fiber structure, and the fabricated material is used as the cathode material of lithium-ion cells.

### BACKGROUND

With the increasing application of lithium-ion cell technology in various fields such as electric vehicles, aviation and electronic equipment, higher performance of lithium-ion cells is demanded. The electrode material is a key factor affecting the cell performance. In the prior art, most of the cathode materials of lithium-ion cells sold on the market are graphite materials. Theoretically, the lithium intercalation capacity of graphite is 372mAh/g, and it is well-crystallized and highly oriented. However, during the intercalation and de-intercalation of lithium ions, its volume expansion and shrinkage may reach 10%, making its layered structure vulnerable during charging and discharging cycles. Moreover, the solvent-based electrolytes are inevitably intercalated in the graphite layers during the cycles, causing gas and volume expansion. Under such circumstances, the graphite layers are peeled off, resulting in irreversible loss of active substances and unceasing destruction and regeneration of the SEI (solid electrolyte interface) film, which drastically consumes lithium ions and thus severely shortens the life-span of the cell. Although metal ion compounds are good at conducting lithium ions, their conductivity is poor. Even worse, with the intercalation and de-intercalation of lithium ions, their volumes vary significantly, so that the electrochemical performance, cycle stability and rate capability are low.

Therefore, if a carbon material and a lithium-ion conductor (metal ion compound) are combined to fabricate a novel cathode material with high capacity, ideal rate capability and long life-span, the performance of lithium-ion cells may be greatly improved.

### SUMMARY

The purpose of the present disclosure is to provide a method for fabricating a carbon-bound "lithium-ion conductor-carbon" composite cathode material having a carbon fiber structure. In this method, a lithium-cell cathode material with high power density is fabricated by binding a lithium-ion conductor and a carbon cathode material using a high-strength carbon-fiber net structure composited on site.

To achieve the above purpose, the present disclosure adopts the following technical solution: a method for fabricating a carbon-bound lithium-ion conductor-carbon composite cathode material having a carbon fiber structure, comprising the steps of:
Step 1: uniformly mixing a carbon material, a lithium-ion conductor, an organic polymer material and an organic solvent (capable of dissolving the organic polymer material), thereby obtaining a mixed slurry A;
Step 2: granulating and drying the mixed slurry A to obtain solid particles M;
Step 3: performing a high-temperature carbonization treatment on the solid particles M in an inert atmosphere, thereby obtaining a carbon-bound lithium-ion conductor-carbon composite cathode material having a carbon fiber structure.

In another preferred embodiment, the carbon material in step 1 is at least one selected from graphite, soft carbon and hard carbon.

In another preferred embodiment, the lithium-ion conductor in step 1 is a metal ion compound.

In another preferred embodiment, the metal ions contained in the lithium-ion conductor in step 1 are corresponding ions of the metals excluding Mn, Fe, Co, Ni, Cu, Au, Ag, Zn, Cd, Cr, Cd, Hg, Ge, Pb, Ru, Rh, Pd, Os, Ir and Pt, etc.

In another preferred embodiment, the lithium-ion conductor in step 1 is at least one selected from a lithium-ion metal oxide, a lithium-ion metal composite oxide, a lithium-ion metal sulfide, a lithium-ion metal nitride, a lithium-ion metal fluoride, a lithium-ion metal carbide, a lithium-ion metal selenide, a lithium-ion metal telluride, a lithium-ion metal phosphate, Li₂CO₃, Li₂TiO₃, Li₄Ti₅O₁₂, Li₂ZrO₃, LiVO₃, Li₃VO₄, LiNbO₃, Li₃NbO₄, and Li₃Ln₃M₂O₁₂ (M=Te, W; Ln=Y, Pr, Nd, Sm, Eu, Gd, Tb, Dy, Ho, Er, Tm, Yb, Lu).

In another preferred embodiment, the metal nitride in the lithium-ion conductor in step 1 is at least one selected from Li₃N, Li₃N-LiCl, Li₉N₂Cl, Li₃AlN₂, LiSi₂N₃, and Li_{0.85}Ca_{0.075}Si₂N.

In another preferred embodiment, the metal phosphate in the lithium-ion conductor in step 1 is at least one selected from Li₃PO₄, LiMPO₄ (M is at least one selected from Mg²⁺, Ca²⁺, Sr²⁺, Ba²⁺), LiM₂(PO₄)₃ (M=Ge, Ti, Hf) and Li₁₊ₓMₓTi₂₋ₓ(PO₄)₃ (M=Al, Sc, Y, La).

In another preferred embodiment, the weight ratio of the lithium-ion conductor to the carbon material in step 1 is selected from 1:2 -1:100 and preferably from 1:7 -1:9.

In another preferred embodiment, the organic polymer material in step 1 is selected from organic polymer materials capable of being converted into carbon fiber after high-temperature carbonization.

In another preferred embodiment, the organic polymer material in step 1 is at least one selected from polyacrylonitrile, phenolic resin and asphalt.

In another preferred embodiment, the weight of the organic polymer material in step 1 accounts for 1%-30% and preferably 1.5%-10% of the total weight of the rest of materials excluding the solvent.

In another preferred embodiment, the organic solvent in step S1 is a liquid organic substance capable of dissolving the target polymer material, wherein the organic solvent capable of dissolving polyacrylonitrile is at least one selected from but not limited to dimethylformamide (DMF), N, N-dimethylacetamide (DMAc) and dimethyl sulfoxide (DMSO), the organic solvent capable of dissolving phenolic resin is at least one selected from but not limited to methanol, ethanol and propanol, and the organic solvent capable of dissolving asphalt is at least one selected from liquid hydrocarbon solvents such as gasoline and diesel.

In another preferred embodiment, the carbonization treatment temperature in step 3 ranges from 400-1500°C.

In another preferred embodiment, the carbonization treatment duration in step 3 ranges from 1-50 hours.

Compared with the prior art, the present disclosure achieves the following technical effects: the carbon-bound lithium-ion conductor-carbon composite cathode material having a carbon fiber structure fabricated through adopting the present method has a three-dimensional carbon-fiber net structure with high strength. The crystal of the carbon cathode active material and the lithium-ion conductor material are bound in the same particles by the carbon-fiber net, which has the following advantages:
First, compared with a pure graphite carbon cathode material with the same particle size, the material of the present disclosure has better lithium-ion conductivity.

Second, the interiors of material particles fabricated by using the present method are formed by micro-particles of a lithium-ion conductor crystal and carbon cathode active material undergoing carbon fiber binding, which improves the charging/discharging current density of the material.

Third, as the small crystal of lithium-ion conductor and the small carbon particles are bound by conductive carbon fiber, the fabricated material also possesses good conductivity.

Fourth, the gaps between small lithium-ion conductor crystal and carbon micro-particles in the material particles may buffer the volume variation, making the cell's volume variation tolerable during charging and discharging.

Fifth, carbon fiber has very high tensile strength and fiber flexibility, which buffers to a certain extent volume change, pulverization, and agglomeration which occur in the charging/discharging process, and further effectively prevents bound carbon micro-particles from being peeled into multiple layers of graphite under the conditions of cyclic charging/discharging for a long period, thereby improving the cyclic stability of an electrode, improving the rate performance of the material, and leading to high capacity.

Sixth, the lithium-ion conductor and carbon micro-particles are bound in the three-dimensional carbon fiber net, which facilitates the transfer of lithium ions and electric charges at the interface of the lithium-ion conductor and the electrolyte, thus significantly improving the rate performance of the material.

Seventh, as some lithium-ion conductors may also provide larger capacity when the conductivity of the carbon cathode material and the carbon fiber net is good, the capacity of some composite materials may be larger than that of single carbon cathode material.

The production process of the present material is short and low-cost; when the fabricated mixed particles undergo high temperature processing, a polymer material is carbonized into a three-dimensional carbon fiber net having a carbon fiber structure, which binds lithium-ion conductors and carbon micro-particles in the same particles and completes a step of material production.

### BRIEF DESCRIPTION OF THE DRAWINGS

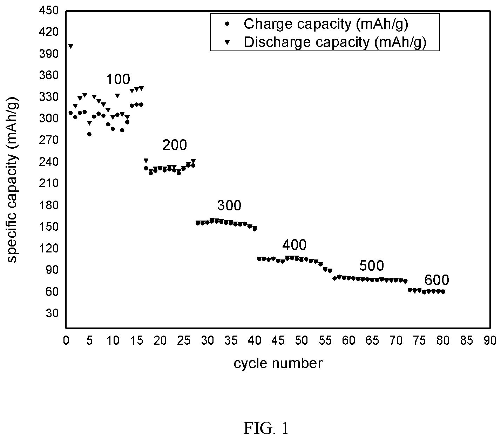

Figure 1 is a rate cycling diagram of a pure mesophase microsphere material used as the cathode material in embodiment 1, wherein the material is respectively tested at a current density of 100, 200, 300, 400, 500 and 600mA/g in a voltage ranging from 0.01V-2.00V.

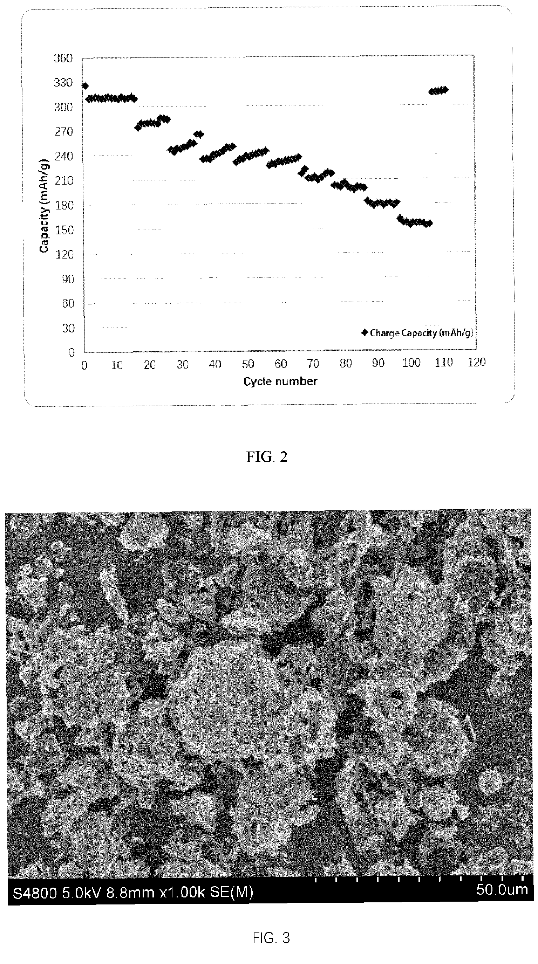

Figure 2 is a rate cycling diagram of a carbon-bound ZrO₂/MgO-carbon composite cathode material having a carbon fiber structure fabricated by using phenolic resin in embodiment 2, wherein the material is respectively tested at a current density of 100, 200, 300, 400, 500 and 600mA/g in a voltage ranging from 0.01 V-2.00V.
Figure 3 is an SEM image of a carbon-bound ZrO₂/MgO-carbon composite cathode material having a carbon fiber structure fabricated by using phenolic resin in embodiment 2, wherein the material is respectively tested at a current density of 100, 200, 300, 400, 500 and 600mA/g in a voltage ranging from 0.01V-2.00V.

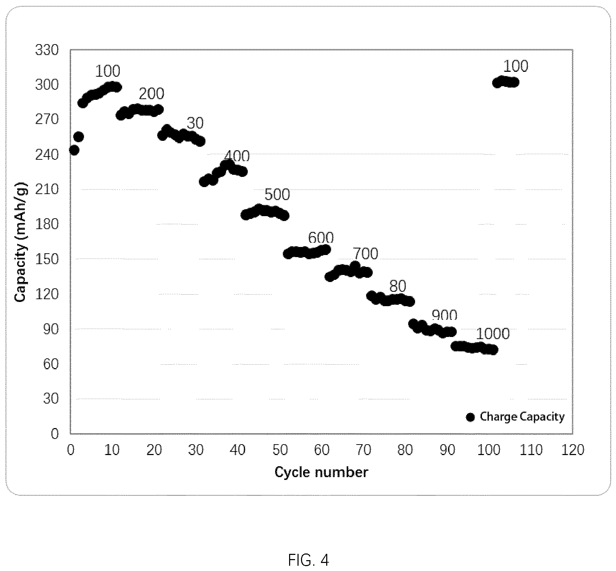

Figure 4 is a rate cycling diagram of a carbon-bound ZrO₂/CaO-carbon composite cathode material having a carbon fiber structure fabricated by using polyacrylonitrile in embodiment 3, wherein the material is respectively tested at a current density of 100, 200, 300, 400, 500 and 600mA/g in a voltage ranging from 0.01V-2.00V.

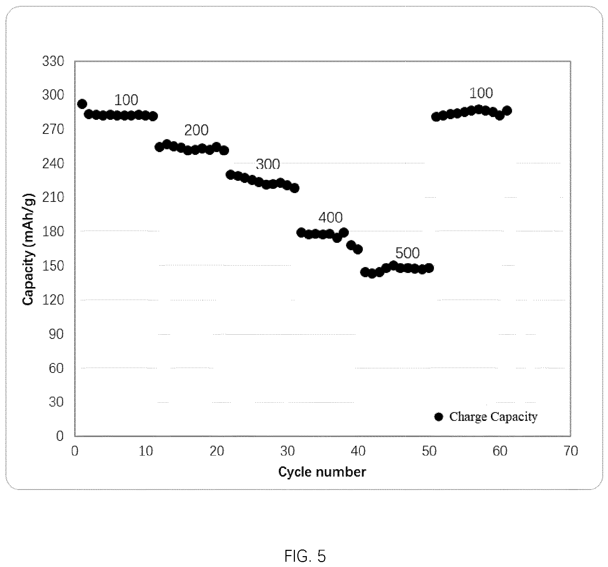

Figure 5 is a rate cycling diagram of a carbon-bound TiO₂/MgO/CaO-carbon composite cathode material having a carbon fiber structure fabricated by using polyacrylonitrile in embodiment 4, wherein the material is respectively tested at a current density of 100, 200, 300, 400, 500 and 600mA/g in a voltage ranging from 0.01V-2.00V.

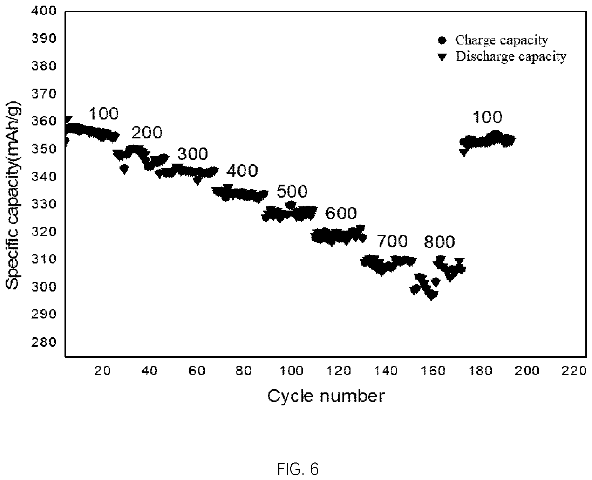

Figure 6 is a rate cycling diagram of a carbon-bound TiO₂/MgO/CaO-carbon composite cathode material having a carbon fiber structure fabricated by using polyacrylonitrile in embodiment 5, wherein the material is respectively tested at a current density of 100, 200, 300, 400, 500 and 600mA/g in a voltage ranging from 0.01V-2.00V.

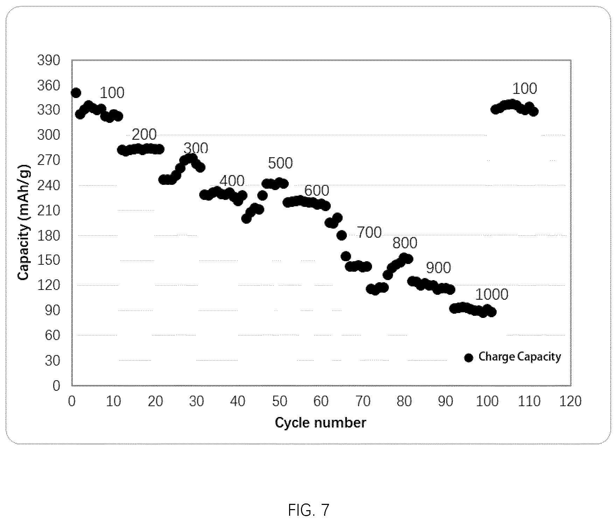

Figure 7 is a rate cycling diagram of a carbon-bound ZrO₂/Y₂O₃-carbon composite cathode material having a carbon fiber structure fabricated by using phenolic resin in embodiment 6, wherein the material is respectively tested at a current density of 100, 200, 300, 400, 500 and 600mA/g in a voltage ranging from 0.01V-2.00V.

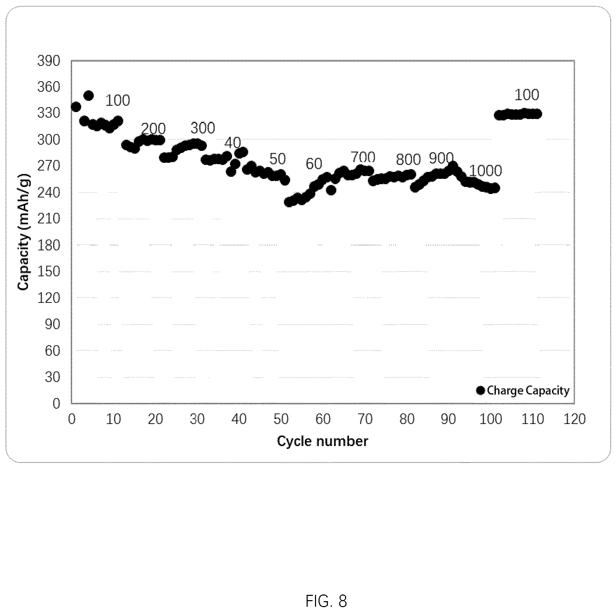

Figure 8 is a rate cycling diagram of a carbon-bound TiO₂/La₂O₃-carbon composite cathode material having a carbon fiber structure fabricated by using phenolic resin in embodiment 7, wherein the material is respectively tested at a current density of 100, 200, 300, 400, 500 and 600mA/g in a voltage ranging from 0.01V-2.00V.

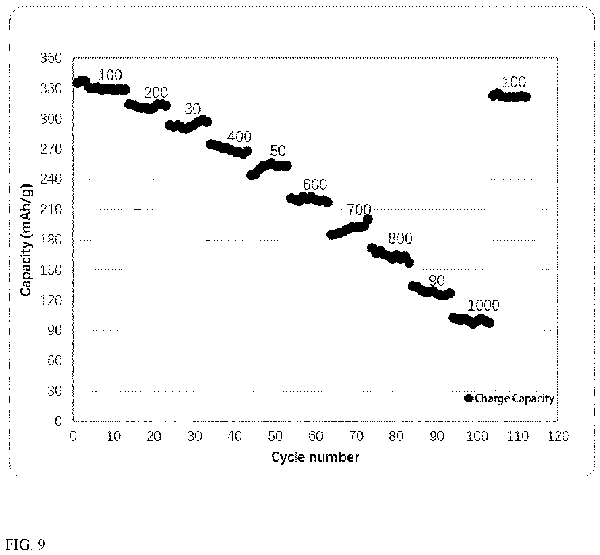

Figure 9 is a rate cycling diagram of a carbon-bound Li₃PO₄-carbon composite cathode material having a carbon fiber structure fabricated by using phenolic resin in embodiment 8, wherein the material is respectively tested at a current density of 100, 200, 300, 400, 500 and 600mA/g in a voltage ranging from 0.01V-2.00V.

### DETAILED DESCRIPTION

Drawings and detailed embodiments are combined hereinafter to further elaborate the method for fabricating a carbon-bound lithium-ion conductor-carbon composite cathode material having a carbon fiber structure of the present disclosure.

### Embodiment 1

As a comparison, in this embodiment, a pure mesophase microsphere material is adopted to fabricate a half-cell for testing.

The process of fabricating a cell, comprising: weighing 0.8000g of mesophase carbon microspheres (N₇), adding 0.1003g of conductive carbon black and 3.3333g of NMP solution containing 3.0% PVDF, thereby making the mass ratio of N₇ to conductive carbon black to PVDF be 8:1:1; subsequently, ball-milling for 30 minutes to obtain a slurry, and coating the slurry on a copper foil to obtain an electrode piece having a thickness of 90µm; drying in a furnace in a nitrogen atmosphere at a temperature of 120°C for 3 hours, and making the electrode piece into a half-cell in a glove box; weighing a small round piece and placing it into an anode shell; subsequently, placing a diaphragm, feeding 60µl of electrolyte solution, and sequentially placing a metal lithium piece, a gasket, an elastic piece and a cathode shell; finally, hydraulically packaging using a hydraulic machine, thereby obtaining a button cell.

The process of testing the cell, comprising: respectively testing the obtained button cell at a current density of 100, 200, 300, 400, 500 and 600mA/g under a voltage ranging from 0.01V to 2.00V, and measuring the gram capacity at different current densities, thus obtaining the results shown in Figure 1 of the specification.

The test results of the pure mesophase carbon microsphere material in embodiment 1 show that the gram capacity of the material greatly decreases when the current density increases: when the current density is 300mA/g, the capacity is 150mAh/g, and when the current density increases to 400mA/g, the capacity decreases to 90mAh/g.

### Embodiment 2

In this embodiment, phenolic resin is adopted in the method for fabricating a carbon-bound ZrO₂/MgO-carbon composite cathode material having a carbon fiber structure, and the fabricated material is made into a button cell for testing.

A method for fabricating the material, comprising the steps of:
First, weighing 1324.00g of absolute ethyl alcohol, then adding 25.91g of ZrO₂, 16.94g of MgO and 385.65g of mesophase carbon microspheres having an average particle size of 20µm, thereby making the mass ratio of metal oxide to carbon be 1:9; subsequently, adding 64.27g of an ethanol solution containing 20wt% of phenolic resin, and making the phenolic resin account for 3% of the total amount of ZrO₂, MgO and carbon; ball-milling, mixing and discharging, thereby obtaining a mixed slurry.

Second, spray-drying at a temperature of 100°C to obtain a solid powder.

Third, taking 5.0012g of the solid powder and feeding it into a tube furnace; subsequently, sintering at a temperature of 800°C for 5 hours in a nitrogen atmosphere, thus obtaining a carbon-bound ZrO₂/MgO-carbon composite cathode material having a carbon fiber structure by using phenolic resin.

The process of fabricating a cell, comprising: weighing the composite cathode material, the conductive carbon black and the PVDF according to a mass ratio of 94:3:3; adding the NMP, thus enabling the solid content to reach 24%; mixing in a vacuum mixer for 20 minutes, and then coating on the surface of a copper foil, wherein the coating thickness is 120µm; drying in a drying cabinet at a temperature of 90°C for 30 minutes, and then roll-pressing and slicing; subsequently, placing into a vacuum drying chamber and drying at a temperature of 90°C for 12 hours; making the electrode piece into a half-cell in a glove box; weighing a small round piece and placing it into an anode shell; subsequently, placing a diaphragm, feeding 60µl of electrolyte solution, and sequentially placing a metal lithium piece, a gasket, an elastic piece and a cathode shell; finally, hydraulically packaging using a hydraulic machine, thereby obtaining a button cell.

The process of testing the cell, comprising: charging and discharging the button cell using a constant current for one cycle at a current density of 33mA/g, and then respectively charging and discharging the cell at a current density of 100mA/g, 200mA/g, 300mA/g, 400mA/g, 500mA/g, 600mA/g, 700mA/g, 800mA/g, 900mA/g and 1000mA/g for 10 cycles; finally, charging and discharging the cell at a current density of 100mA/g for 10 cycles, thus obtaining the results shown in Figure 2 of the specification.

It can be seen from Figure 2 that, the fabricated cell material has high stability, and has larger capacity than the pure mesophase carbon material at a high current density. As shown in Figure 3, in the SEM image of the cathode material, it can be seen that the small metal oxide crystals (ZrO₂/MgO) and small carbon particles of the lithium-ion conductor are uniformly dispersed and the particle size is small. The carbon fibers exerting a binding function are uniformly distributed, and the gaps in and between the particles allow the electrolyte solution to fully infiltrate, which shortens the diffusion distance of lithium ions in the carbon crystal, and guarantees the stability of the particles.

### Embodiment 3

In this embodiment, polyacrylonitrile is adopted in the method for fabricating a carbon-bound ZrO₂/CaO-carbon composite cathode material having a carbon fiber structure, and the fabricated material is made into a button cell for testing.

A method for fabricating the material, comprising the steps of:
First, weighing 100.00g of water, then adding 21.54g of ZrO₂ and 20.01g of CaCO₃, thus making the molar ratio of Zr:Ca be 1:2; subsequently, adding 12.52g of polyethylene glycol (PEG), and making the PEG account for 30% of the total amount of ZrO₂ and CaCO₃; ball-milling in a ball mill at a speed of 250r/min for 10 hours, discharging, and adding 120.0mL of water to wash; spray-drying at a temperature of 120°C to obtain a white powder; taking 25.00g of the white powder and feeding it into a tube furnace in an air atmosphere; sintering at a temperature of 1000°C for 7 hours, grinding the sample powder and screening using an 80-mesh sieve.

Second, weighing 6.96g of the obtained sample powder, adding 10.0mL of NMP solution and 27.84g of carbon (N₇), thus making the mass ratio of the inorganic substance to carbon be 2:8; subsequently, adding 34.8g of NMP solution containing 5wt.% of polyacrylonitrile, and making the polyacrylonitrile account for 5% of the total amount of the inorganic substance and the carbon; finally, adding 20.0mL of NMP solution and ball-milling, thereby obtaining a mixed slurry.

Third, drying the mixed slurry using a spray dryer at a temperature of 150°C, thereby obtaining a solid powder.

Fourth, feeding the solid powder into a tube furnace, and sintering at a temperature of 1000°C in a nitrogen atmosphere for 5 hours, thus obtaining a carbon-bound ZrO₂/CaO-carbon composite cathode material having a carbon fiber structure by using polyacrylonitrile.

In this embodiment, the process of fabricating and testing the cell is the same as that in embodiment 2. As shown in Figure 4, the obtained material has excellent high current density performance and possesses high power capacity at high current density.

### Embodiment 4

In this embodiment, polyacrylonitrile is adopted in the method for fabricating a carbon-bound TiO₂/MgO/CaO-carbon composite cathode material having a carbon fiber structure, and the fabricated material is made into a button cell for testing.

A method for fabricating the material, comprising the steps of:
First, weighing 100.00g of water, then adding 15.92g of TiO₂, 10.47g of MgO, 5.642g of CaO and 9.61g of PEG, and making PEG accounts for 30% of the total amount of TiO₂, MgO and CaO; ball-milling and spray-drying at a temperature of 120°C to obtain a white powder; taking 25.07g of the white powder and feeding it into a tube furnace in an air atmosphere; sintering at a temperature of 1350°C for 7 hours, grinding the sample powder and screening using an 80-mesh sieve.

Second, weighing 6.78g of the obtained sample powder, adding 10.0mL of NMP solution, ball-milling, and then adding 12.59g of carbon (N₇), thus making the mass ratio of the inorganic substance to carbon be 3.5:6.5; subsequently, adding 30.99g of NMP solution containing 5wt.% of polyacrylonitrile, and making the polyacrylonitrile account for 5% of the total amount of the inorganic substance and carbon; finally, adding 30.0mL of NMP solution and ball-milling, thereby obtaining a mixed slurry.

Third, spray-drying the mixed slurry to obtain a solid powder.

Fourth, feeding the solid powder into a tube furnace, and sintering at a temperature of 900°C in a nitrogen atmosphere for 5 hours, thus obtaining a carbon-bound TiO₂/MgO/CaO-carbon composite cathode material having a carbon fiber structure by using polyacrylonitrile.

In this embodiment, the process of fabricating and testing the cell is the same as that in embodiment 2. As shown in Figure 5, the obtained material has excellent high current density performance and possesses high power capacity at high current density.

### Embodiment 5

In this embodiment, phenolic resin is adopted in the method for fabricating a carbon-bound TiO₂/Li₂O-carbon composite cathode material having a carbon fiber structure, and the fabricated material is made into a button cell for testing.

A method for fabricating the material, comprising the steps of:
First, respectively weighing 2.0498g of LiOH·H₂O and 1.9509g of TiO₂ according to a molar ratio of 2:1; subsequently, weighing 6.0040g of flake graphite (HC-7), 30.99g of an ethanol solution containing 5wt% of phenolic resin, measuring out 40.0ml of ethyl alcohol, and feeding them into a ball-milling tank; after ball-milling for 6 hour at a speed of 180r/min, discharging, thus obtaining a mixed slurry.

Second, spray-drying the mixed slurry to obtain a solid powder.

Third, feeding the obtained solid powder into a high-temperature tube furnace, keeping warm at a temperature of 850°C for 4 hours in an argon atmosphere, thus obtaining a carbon-bound TiO₂/Li₂O-carbon composite cathode material having a carbon fiber structure by using phenolic resin.

In this embodiment, the process of fabricating and testing the cell is the same as that in embodiment 2. As shown in Figure 6, the obtained material has excellent high current density performance and possesses high power capacity at high current density.

### Embodiment 6

In this embodiment, phenolic resin is adopted in the method for fabricating a carbon-bound ZrO₂/Y₂O₃-carbon composite cathode material having a carbon fiber structure, and the fabricated material is made into a button cell for testing.

A method for fabricating the material, comprising the steps of:
First, weighing 1310.90g of absolute ethyl alcohol, 42.8559g of ZrO₂ and 1.2856g of Y₂O₃, stirring for 5 minutes, and sanding for 15 minutes at a speed of 2500r/min in a sanding mill; subsequently, adding 397.22g of carbon (FSN) and 66.25g of absolute ethyl alcohol solution containing 20wt.% of phenolic resin, sanding at a speed of 2500r/min for 10 minutes, and discharging to obtain a mixed slurry.

Second, spray-drying the mixed slurry at a temperature of 100°C to obtain a solid powder.

Third, feeding the obtained solid powder into a high-temperature tube furnace, sintering at a temperature of 800°C for 5 hours in a nitrogen atmosphere, thus obtaining a carbon-bound ZrO₂/Y₂O₃-carbon composite cathode material having a carbon fiber structure by using phenolic resin.

In this embodiment, the process of fabricating and testing the cell is the same as that in embodiment 2. As shown in Figure 7, the obtained material has excellent high current density performance and possesses high power capacity at high current density.

### Embodiment 7

In this embodiment, phenolic resin is adopted in the method for fabricating a carbon-bound TiO₂/La₂O₃-carbon composite cathode material having a carbon fiber structure, and the fabricated material is made into a button cell for testing.

A method for fabricating the material, comprising the steps of:
First, weighing 1335.06g of absolute ethyl alcohol, 42.8556g of TiO₂ and 2.1436g of La₂O₃, stirring for 5 minutes, and sanding for 15 minutes at a speed of 2500r/min in a sanding mill; subsequently, adding 404.96g of carbon (FSN) and 67.56g of absolute ethyl alcohol solution containing 20wt.% of phenolic resin, then ball-milling to obtain a mixed slurry.

Second, spray-drying the mixed slurry at a temperature of 100°C using a spray dryer, thus obtaining a black powder.

Third, weighing 6.8952g of the obtained black powder and feeding it into a high-temperature tube furnace, sintering at a temperature of 800°C for 5 hours in a nitrogen atmosphere, thus obtaining a carbon-bound TiO₂/La₂O₃-carbon composite cathode material having a carbon fiber structure by using phenolic resin.

In this embodiment, the process of fabricating and testing the cell is the same as that in embodiment 2. As shown in Figure 8, the obtained material has excellent high current density performance and possesses high power capacity at high current density.

### Embodiment 8

In this embodiment, phenolic resin is adopted in the method for fabricating a carbon-bound Li₃PO₄-carbon composite cathode material having a carbon fiber structure, and the fabricated material is made into a button cell for testing.

A method for fabricating the material, comprising the steps of:
First, weighing 900.05g of absolute ethyl alcohol, adding 30.06g of lithium phosphate, stirring for 5 minutes, and sanding for 15 minutes at a speed of 2500r/min; subsequently, adding 270.05g of carbon (FSN) and making the mass ratio of lithium phosphate to carbon be 1:9; adding 45.06g of 20wt.% phenolic resin and making phenolic resin account for 3% of the total amount of lithium phosphate and carbon; finally, sanding for 10 minutes at a speed of 2500r/min, discharging and obtaining a mixed slurry.

Second, spray-drying the mixed slurry at a temperature of 100°C using a spray dryer, thus obtaining a solid powder.

Third, weighing 8.6043g of the solid powder and feeding it into a high-temperature tube furnace, sintering at a temperature of 800°C for 5 hours in a nitrogen atmosphere, thus obtaining a carbon-bound Li₃PO₄-carbon composite cathode material having a carbon fiber structure by using phenolic resin.

In this embodiment, the process of fabricating and testing the cell is the same as that in embodiment 2. As shown in Figure 9, the obtained material has excellent high current density performance and possesses high power capacity at high current density.

The rate cycling diagram of the cathode materials obtained in embodiment 1-8 are respectively tested at a current density of 100, 200, 300, 400, 500 and 600mA/g in a voltage ranging from 0.01V-2.00V, and the test results are shown in Table 1.

**Table 1:**

| Sample No. | Capacity at 300mA/g (unit: mAh/g) | Capacity at 400mA/g (unit: mAh/g) |
|---|---|---|
| Embodiment 1 | 150 | 90 |
| Embodiment 2 | 255 | 240 |
| Embodiment 3 | 251 | 220 |
| Embodiment 4 | 220 | 160 |
| Embodiment 5 | 345 | 335 |
| Embodiment 6 | 260 | 230 |
| Embodiment 7 | 290 | 280 |
| Embodiment 8 | 281 | 275 |

According to the data shown in Table 1 and Figures 1-9 of the specification, it can be seen that, various carbon-bound lithium-ion conductor-carbon composite cathode materials having a carbon fiber structure fabricated according to the method of the present disclosure have much higher capacity than pure carbon materials, remain high stability and possess high gram capacity at high current density. The present disclosure makes significant progress compared with the prior art.

The aforesaid description of the disclosed embodiments enables those skilled in the art to realize or use the present disclosure. The aforesaid embodiments may be modified or combined by those skilled in the art according to actual needs without departing from the spirit of the present disclosure. Therefore, the scope of the present disclosure is defined by the claims of the present disclosure.

## Claims

1. A method for fabricating a carbon-bound lithium-ion conductor-carbon composite cathode material having a carbon fiber structure, comprising the steps of:
Step 1: uniformly mixing a carbon material, a lithium-ion conductor, an organic polymer material and an organic solvent, thereby obtaining a mixed slurry A;
Step 2: granulating and drying the mixed slurry A to obtain solid particles M;
Step 3: performing a high-temperature carbonization treatment on the solid particles M in an inert atmosphere, thereby obtaining a carbon-bound lithium-ion conductor-carbon composite cathode material having a carbon fiber structure.

2. The method for fabricating a carbon-bound lithium-ion conductor-carbon composite cathode material having a carbon fiber structure of claim 1, wherein the carbon material is at least one selected from graphite, soft carbon and hard carbon.

3. The method for fabricating a carbon-bound lithium-ion conductor-carbon composite cathode material having a carbon fiber structure of claim 1, wherein the lithium-ion conductor is a metal ion compound.

4. The method for fabricating a carbon-bound lithium-ion conductor-carbon composite cathode material having a carbon fiber structure of claim 3, wherein the metal ion compound are one or more corresponding ion compounds of the metals excluding Mn, Fe, Co, Ni, Cu, Au, Ag, Zn, Cd, Cr, Cd, Hg, Ge, Pb, Ru, Rh, Pd, Os, Ir and Pt, etc.

5. The method for fabricating a carbon-bound lithium-ion conductor-carbon composite cathode material having a carbon fiber structure of claim 1, wherein the lithium-ion conductor is at least one selected from a lithium-ion metal oxide, a lithium-ion metal composite oxide, a lithium-ion metal sulfide, a lithium-ion metal nitride, a lithium-ion metal fluoride, a lithium-ion metal carbide, a lithium-ion metal selenide, a lithium-ion metal telluride, a lithium-ion metal phosphate, Li₂CO₃, Li₂TiO₃, Li₄Ti₅O₁₂, Li₂ZrO₃, LiVO₃, Li₃VO₄, LiNbO₃, Li₃NbO₄, and Li₃Ln₃M₂O₁₂ (M is one selected from Te or W and Ln is one selected from Y, Pr, Nd, Sm, Eu, Gd, Tb, Dy, Ho, Er, Tm, Yb, Lu).

6. The method for fabricating a carbon-bound lithium-ion conductor-carbon composite cathode material having a carbon fiber structure of claim 5, wherein the metal nitride is at least one selected from Li₃N, Li₃N-LiCl, Li₉N₂Cl, Li₃AlN₂, LiSi₂N₃, and Li_{0.85}Ca_{0.075}Si₂N.

7. The method for fabricating a carbon-bound lithium-ion conductor-carbon composite cathode material having a carbon fiber structure of claim 6, wherein the metal phosphate in the lithium-ion conductor is at least one selected from Li₃PO₄, LiMPO₄ (M is at least one selected from Mg²⁺, Ca²⁺, Sr²⁺, Ba²⁺), LiM₂(PO₄)₃ (M is at least one selected from Ge, Ti and Hf) and Li₁₊ₓMₓTi₂₋ₓ(PO₄)₃ (M is at least one selected from Al, Sc, Y and La).

8. The method for fabricating a carbon-bound lithium-ion conductor-carbon composite cathode material having a carbon fiber structure of claim 1, wherein the weight ratio of the lithium-ion conductor to the carbon material in step 1 is selected from 1:2 -1:100.

9. The method for fabricating a carbon-bound lithium-ion conductor-carbon composite cathode material having a carbon fiber structure of claim 1, wherein the organic polymer material in step 1 is an organic polymer material capable of being converted into carbon fiber after high-temperature carbonization.

10. The method for fabricating a carbon-bound lithium-ion conductor-carbon composite cathode material having a carbon fiber structure of claim 1, wherein the organic polymer material in step 1 is at least one selected from polyacrylonitrile, phenolic resin and asphalt.

11. The method for fabricating a carbon-bound lithium-ion conductor-carbon composite cathode material having a carbon fiber structure of claim 1, wherein the weight of the organic polymer material in step 1 accounts for 1%-30% and preferably 1.5%-10% of the total weight of the rest of materials excluding the solvent.

12. The method for fabricating a carbon-bound lithium-ion conductor-carbon composite cathode material having a carbon fiber structure of claim 1, wherein the organic solvent in step S1 is a liquid organic substance capable of dissolving the target polymer material.

13. The method for fabricating a carbon-bound lithium-ion conductor-carbon composite cathode material having a carbon fiber structure of claim 1, wherein the organic solvent capable of dissolving polyacrylonitrile is at least one selected from dimethylformamide (DMF), N, N-dimethylacetamide (DMAc) and dimethyl sulfoxide (DMSO).

14. The method for fabricating a carbon-bound lithium-ion conductor-carbon composite cathode material having a carbon fiber structure of claim 1, wherein the organic solvent capable of dissolving phenolic resin is at least one selected from methanol, ethanol and propanol.

15. The method for fabricating a carbon-bound lithium-ion conductor-carbon composite cathode material having a carbon fiber structure of claim 1, wherein the organic solvent capable of dissolving asphalt is at least one selected from liquid hydrocarbon solvents such as gasoline and diesel.

16. The method for fabricating a carbon-bound lithium-ion conductor-carbon composite cathode material having a carbon fiber structure of claim 1, wherein the carbonization treatment temperature of the material in step 3 ranges from 400-1500°C.

17. The method for fabricating a carbon-bound lithium-ion conductor-carbon composite cathode material having a carbon fiber structure of claim 1, wherein the carbonization treatment duration of the material in step 3 ranges from 1-50 hours.
